# EUROPEAN PATENT SPECIFICATION

(11) **EP 2 185 840 B1**
(45) Date of publication and mention of the grant of the patent: **27.03.2019**
(21) Application number: 08790525.3
(22) Date of filing: 29.08.2008
(51) Int. Cl.: F16H 61/662

(54) **CONTROL DEVICE OF A CONTINUOUSLY VARIABLE TRANSMISSION**
STEUERVORRICHTUNG FÜR STUFENLOSES GETRIEBE
DISPOSITIF DE COMMANDE D'UNE TRANSMISSION VARIABLE CONTINUE

(30) Priority: 10.09.2007 JP 2007234089
(43) Date of publication of application: 19.05.2010
(73) Proprietor: TOYOTA JIDOSHA KABUSHIKI KAISHA, Toyota-shi, Aichi-ken, 471-8571 (JP)
(72) Inventor: KUWAHARA, Seiji, Toyota-shi, Aichi-ken, 471-8571 (JP); KAIGAWA, Masato, Toyota-shi, Aichi-ken, 471-8571 (JP)
(74) Representative: TBK
(86) International application number: PCT/JP2008/002371
(87) International publication number: WO 2009/034690

(56) References cited:
- EP-A- 1 079 149
- US-A- 4 610 183
- US-A- 4 656 587
- US-A- 4 735 112
- US-A- 5 022 285

## Description

### Technical Field

The present invention relates to a control device of a continuously variable transmission, as is known from US 4 735 112 A, controlling a gear ratio of a continuously variable transmission mounted in a vehicle.

### Background Art

In a vehicle whereupon an engine (internal combustion engine) is mounted, an automatic transmission automatically and optimally setting a gear ratio between the engine and a drive wheel is known as a transmission for suitably transmitting torque and rotation speed generated by the engine to the drive wheel in accordance with a driving condition of the vehicle.

For example, a planetary gear type transmission setting a gear ratio (gear position) using a clutch and brake and a planetary gear device and a continuously variable transmission of belt-type (CVT) performing stepless adjustment of a gear ratio exist as an automatic transmission mounted in a vehicle.

A continuously variable transmission of belt-type has a belt wound around a primary pulley (input-side pulley) and a secondary pulley (output-side pulley) having a pulley groove (V-groove) and is configured such that a gear ratio is set in a stepless fashion by simultaneously expanding a groove width of the pulley groove of one of the pulleys and contracting a groove width of the pulley grove of the other pulley so as to continuously vary a winding radius (effective diameter) of the belt with respect to each of the pulleys. A torque transmitted in this continuously variable transmission of belt-type is a torque corresponding to a load acting in a direction in which the belt and the pulleys are made to contact mutually, and therefore, in order to apply tension to the belt, the belt is clamped by the pulleys.

Furthermore, as explained above, a speed change of a continuously variable transmission of belt-type is carried out by expanding and contracting the groove widths of the pulley grooves. Specifically, each of the primary pulley and the secondary pulley comprises a fixed sheave and a moveable sheave, and a speed change is carried out by moving the moveable sheave forwards and backwards in an axial direction using a hydraulic actuator provided at a rear face side thereof.

In this way, in a continuously variable transmission of belt-type, the belt is clamped by the pulleys in order to apply tension to the belt, and in addition, the condition of clamping of the belt by the pulleys is changed in order to carry out a speed change. Accordingly, the groove width of the primary pulley and the groove width of the secondary pulley are simultaneously changed by delivering hydraulic pressure corresponding to a required torque as typified by engine load, etc. to the hydraulic actuator at the secondary pulley side so as to secure a necessary transmission torque capacity and by delivering hydraulic pressure for carrying out a speed change to the hydraulic actuator at the primary pulley side.

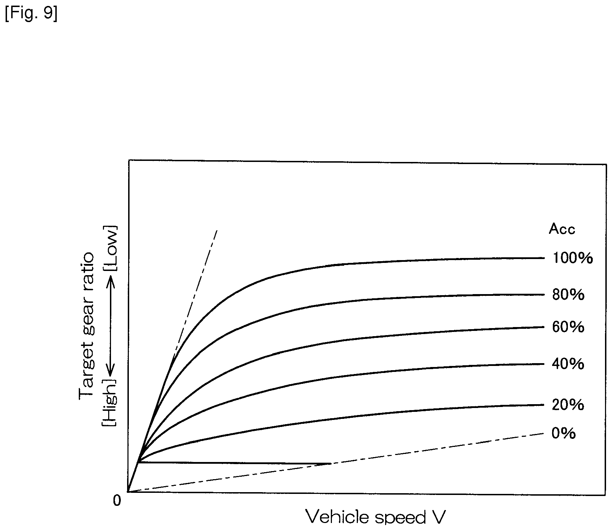

Furthermore, in a vehicle wherein such a continuously variable transmission is mounted, a gear ratio map (see FIG. 9) for achieving an optimum gear ratio in accordance with, for example, a vehicle speed and an amount of accelerator opening is recorded in an ECU (Electronic Control Unit), etc., and the gear ratio is automatically set (for example, see Patent Citation 1) by controlling the hydraulic actuator at the primary pulley side based on a target gear ratio calculated by referring to the gear ratio map based on the vehicle speed and the amount of accelerator opening.

Here, a technology described in Patent Citation 2 as mentioned hereinafter exists as a technology related to control of a speed change of a continuously variable transmission. The technology described in this Patent Citation 2 comprises a low-speed type shift schedule and a high-speed type shift schedule, and upon switching from the low-speed type shift schedule to the high-speed type shift schedule, a target engine rotation speed or a target drive pulley rotation speed is increased as a function of time from a point in time whereat changing of the shift schedule is determined to have occurred, thus preventing sudden changes in torque from occurring.
Patent Citation 1: JP2001-330135A
Patent Citation 2: Japanese Patent No. 2605840

### Disclosure of Invention

### Technical Problem

In speed change control of a continuously variable transmission, however, as the target gear ratio is calculated as explained above by referring to a gear ratio map, etc. as shown in FIG. 9 based on the vehicle speed and the amount of accelerator opening, a final target gear ratio is uniquely and statically decided. For this reason, when the vehicle speed or the amount of accelerator opening (target power) change, the gear ratio changes as needed pursuant thereto, and therefore, a gear ratio change has constantly occurred upon depression or return of the accelerator by foot and responsiveness with respect to an accelerator operation has dropped.

Taking such a point into consideration, transient control limiting a change amount of the gear change upon depression or return of the accelerator by foot is carried out, but even in this type of transient control, a static target moves, and therefore, it is not possible to limit the change amount of the gear change to such a degree that drivability can be improved.

It should be noted that the above-mentioned Patent Citation 2 only discloses a technology whereby, upon switching from the low-speed type shift schedule to the high-speed type shift schedule, the target engine rotation speed or the target drive pulley rotation speed is increased as a function of time from a point in time whereat changing of the shift schedule is determined to have occurred, thus preventing sudden changes in torque from occurring. In this Patent Citation 2, therefore, no consideration whatsoever is given to a change in the gear ratio upon depression or return of the accelerator by foot. Accordingly, even if the technology described in Patent Citation 2 is used, the above-explained problem cannot be resolved.

In light of such existing circumstances, it is an object of the present invention to provide, within a vehicle wherein a continuously variable transmission is mounted, a control device of the continuously variable transmission capable of improving responsiveness and drivability upon depression or return of the accelerator by foot.

### Technical Solution

In order to achieve the above object, the present invention provides a control device of a continuously variable transmission controlling a gear ratio of a continuously variable transmission mounted in a vehicle that is provided with a first target gear-ratio calculation means for calculating a first target gear ratio based on a driving condition of the vehicle (specifically, the vehicle speed and the accelerator opening amount) and a second target gear-ratio calculation means for calculating a second target gear ratio higher than the first target gear ratio based on a driving condition of the vehicle. Furthermore, it is characterized in that, with regard to a region wherein the first target gear ratio calculated by the first target gear-ratio calculation means is not more "high" than a gear ratio of the continuously variable transmission and the second target gear ratio calculated by the second target gear-ratio calculation means is not more "low" than the gear ratio of the continuously variable transmission, the gear ratio of the continuously variable transmission is held. It should be noted that a gear ratio described as "high" herein is a "small" gear ratio, and a gear ratio described as "low" herein is a "big" gear ratio.

A configuration wherein a lower limit of a low side of the gear ratio of the continuously variable transmission is guarded by adopting the first target gear ratio calculated by the first target gear-ratio calculation means as a current gear ratio of the continuously variable transmission when the first target gear ratio is more "high" than a previous gear ratio of the continuously variable transmission may be cited as a specific configuration of the present invention. Furthermore, a configuration wherein an upper limit of a high side of the gear ratio of the continuously variable transmission is guarded by adopting the second target gear ratio calculated by the second target gear-ratio calculation means as a current gear ratio of the continuously variable transmission when the second target gear ratio is more "low" than a previous gear ratio of the continuously variable transmission may be cited.

With the present invention, responsiveness to an accelerator operation upon depression or return of the accelerator by foot can be improved. This point is explained hereinafter.

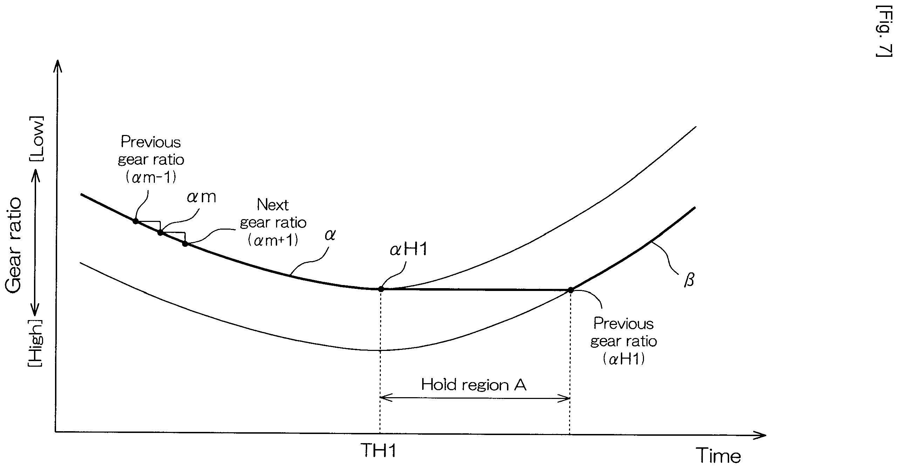

First, in the present invention, the gear ratio of the continuously variable transmission is controlled using the first target gear ratio (for example, a target gear ratio prioritizing fuel efficiency) calculated by the first target gear-ratio calculation means when, for example, a target power (accelerator opening amount) changes to a decreasing side. During this speed change control, the first target gear ratio ("alpha") will be more "high" (see FIG. 7) than the gear ratio (previous gear ratio) of the continuously variable transmission. Next, if the target power reverses due to the accelerator being depressed by foot during the process of the target power changing to the decreasing side, the first target gear ratio becomes not more "high" than the gear ratio (previous gear ratio) of the continuously variable transmission (first target gear ratio ("alpha") "<=" previous gear ratio), and at this point in time, the gear ratio of the continuously variable transmission is held at the first target gear ratio. Then, after the second target gear ratio ("beta") has become more "low" than the gear ratio held as explained above during the process of the target power increasing, the gear ratio of the continuously variable transmission is controlled using the second target gear ratio (for example, a target gear ratio prioritizing target power or drive force) calculated by the second target gear-ratio calculation means.

In this way, in a case wherein the target power reverses due to depression of the accelerator by foot when the target power (accelerator opening amount) is changing to a decreasing side, the power and drive force can be changed using only the engine torque by holding the gear ratio of the continuously variable transmission, and responsiveness and direct feel with respect to the accelerator operation are improved.

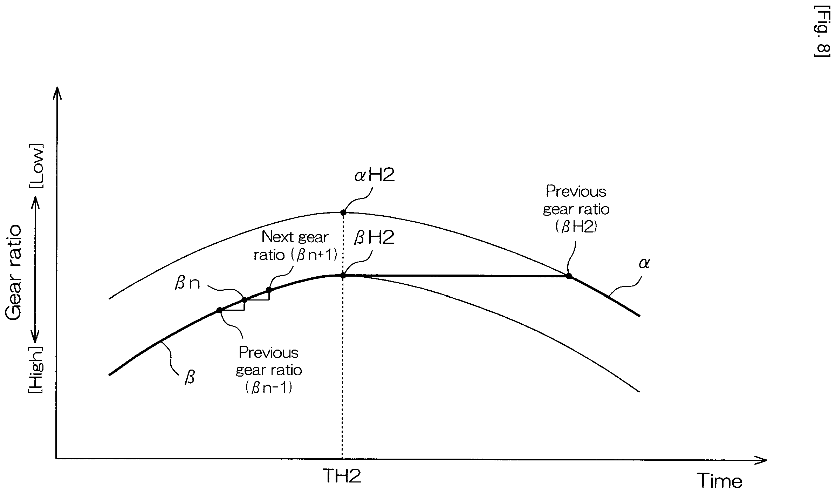

Furthermore, in the present invention, the gear ratio of the continuously variable transmission is controlled using the second target gear ratio calculated by the second target gear-ratio calculation means when, for example, a target power changes to an increasing side. During this speed change control, the second target gear ratio ("beta") will be more "low" (see FIG. 8) than the gear ratio (previous gear ratio) of the continuously variable transmission. Next, if the target power reverses due to a return operation of the accelerator by foot during the process of the target power changing to the increasing side, the second target gear ratio becomes not more "low" than the gear ratio (previous gear ratio) of the continuously variable transmission (second target gear ratio ("beta") ">=" previous gear ratio), and at this point in time, the gear ratio of the continuously variable transmission is held at the second target gear ratio. Then, after the first target gear ratio ("alpha") has become more "high" than the gear ratio held as explained above during the process of the target power decreasing, the gear ratio of the continuously variable transmission is controlled using the first target gear ratio calculated by the first target gear-ratio calculation means.

In this way, in a case wherein the target power reverses due to a return operation of the accelerator by foot when the target power is changing to an increasing side, responsiveness to the accelerator operation can be improved by holding the gear ratio of the continuously variable transmission.

In the present invention, the first target gear ratio is calculated using a first map having a vehicle speed and an accelerator opening amount of the vehicle as a parameter, and the second target gear ratio is calculated using a second map having a vehicle speed and an accelerator opening amount of the vehicle as a parameter. Further, a configuration wherein the gear ratio of the continuously variable transmission is controlled based on the first target gear ratio (for example, a target gear ratio prioritizing fuel efficiency) calculated using the first map (up-use map) when the accelerator opening amount decreases and the gear ratio of the continuously variable transmission is controlled based on the second target gear ratio (for example, a target gear ratio prioritizing target power or drive force) calculated using the second map (down-use map) when the accelerator opening amount becomes higher can be employed.

It should be noted that the first target gear ratio and the second target gear ratio can be calculated using a map as explained above and can also be calculated using a first target gear-ratio calculating device and a second target gear-ratio calculating device.

### Advantageous Effects

With the present invention, responsiveness and drivability upon depression or return of the accelerator by foot in a vehicle wherein a continuously variable transmission is mounted can be improved.

### Brief Description of the Drawings

FIG. 1 is a schematic configuration diagram of a continuously variable transmission of belt-type to which the present invention is applied.
FIG 2 is a block diagram showing a configuration of a control system of an ECU, etc.
FIG. 3 is a view showing an example of an up-use map used in speed change control of a continuously variable transmission of belt-type.
FIG. 4 is a view showing an example of a down-use map used in speed change control of a continuously variable transmission of belt-type.
FIG. 5 is a view showing a change in a target gear ratio calculated using the maps of FIG. 3 and FIG. 4.
FIG. 6 is a flowchart showing an example of a speed change control of a continuously variable transmission of belt-type.
FIG. 7 is a timing chart showing an example of a speed change control of a continuously variable transmission of belt-type.
FIG. 8 is a timing chart showing another example of a speed change control of a continuously variable transmission of belt-type.
FIG. 9 is a view showing an example of a gear ratio map generally used in a continuously variable transmission.

### Explanation of Reference

4: Continuously variable transmission of belt-type
41: Primary pulley
42: Secondary pulley
413, 414: Hydraulic actuators
8: ECU
20: Hydraulic pressure control circuit
106: Vehicle speed sensor
107: Accelerator opening amount sensor
Ma: Up-use map (for calculation of a first target gear ratio)
Mb: Down-use map (for calculation of a second target gear ratio)

### Best Mode for Carrying Out the Invention

The following is a description of the preferred embodiments of the present invention, with reference to the drawings.

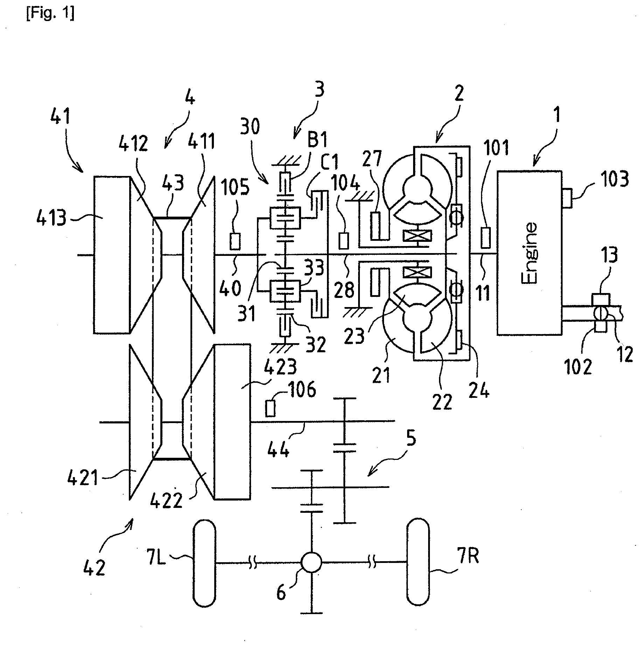

FIG. 1 is a schematic configuration diagram of a vehicle to which the present invention is applied.

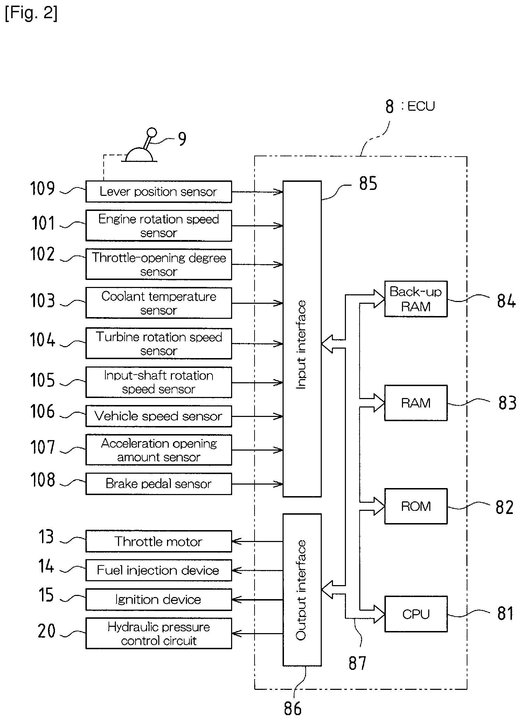

The vehicle of this example is an FF (front-engine, front-drive) type vehicle whereupon an engine (internal combustion engine) 1 constituting a source of motive power for driving, a torque converter 2, a forward-reverse switching device 3, a continuously variable transmission (CVT) 4 of belt-type, a deceleration gear device 5, a differential gear device 6, and an ECU 8 (see FIG. 2) etc., are mounted, and a control device of a continuously variable transmission is realized by that ECU 8 and by a vehicle-speed sensor 106, an accelerator opening amount sensor 107, and a hydraulic pressure control circuit 20, etc. described hereinafter.

A crankshaft 11 constituting an output shaft of the engine 1 is connected to the torque converter 2, and an output of the engine 1 is transmitted from the torque converter 2 to the differential gear device 6 via the forward-reverse switching device 3, the continuously variable transmission 4 of belt-type, and the deceleration gear device 5 and is delivered to left and right drive wheels 7L, 7R.

These engine 1, torque converter 2, forward-reverse switching device 3, continuously variable transmission 4 of belt-type, and ECU 8 are described hereinafter.

### - Engine -

The engine 1 is, for example, a multiple cylinder gasoline engine. A volume of intake air drawn into the engine 1 is adjusted by an electronic-control type throttle valve 12. The throttle valve 12 is capable of electronically controlling a degree of throttle opening independent of an accelerator-pedal operation of a driver, and that degree of opening (throttle-opening degree) is detected by a throttle-opening degree sensor 102. Furthermore, a temperature of a coolant of the engine 1 is detected by a coolant temperature sensor 103.

The throttle-opening degree of the throttle valve 12 is drive controlled by the ECU 8. In specific terms, the throttle-opening degree of the throttle valve 12 is controlled so as to acquire the optimum intake air volume (target air-intake volume) in accordance with an engine rotation speed NE detected by an engine rotation speed sensor 101, a degree of depression by foot of the accelerator pedal by the driver (accelerator opening amount Acc), and other operation conditions of the engine 1. In more specific terms, the actual throttle-opening degree of the throttle valve 12 is detected using the throttle-opening degree sensor 102, and a throttle motor 13 of the throttle valve 12 is feedback controlled in such a way that that actual throttle-opening degree matches the throttle-opening degree (target throttle-opening degree) at which the above-mentioned target air-intake volume is acquired.

### - Torque Converter -

The torque converter 2 is provided with an input-side pump impeller 21, an output-side turbine runner 22, and a stator 23 manifesting torque amplification functionality, etc., and performs transmission of motive power between the pump impeller 21 and the turbine runner 22 via a fluid. The pump impeller 21 is connected to the crankshaft 11 of the engine 1. The turbine runner 22 is connected to the forward-reverse switching device 3 via a turbine shaft 28.

The torque converter 2 is provided with a lock-up clutch 24 directly connecting the input side and the output side thereof. The pump impeller 21 and the turbine runner 22 rotate as one as a result of this lock-up clutch 24 being set to a fully engaged condition. Furthermore, as a result of the lock-up clutch 24 being engaged in a prescribed slip condition (semi-engaged condition), the turbine runner 22 rotates behind the pump impeller 21 with a prescribed amount of slip during driving. It should be noted that the torque converter 2 is provided with a mechanical-type oil pump (hydraulic pressure source) 27 driven through connection with the pump impeller 21.

### - Forward-Reverse Switching Device -

The forward-reverse switching device 3 is provided with a double-pinion type planetary gear mechanism 30, a forward-travel clutch (input clutch) C1, and a reverse-travel brake B1.

A sun gear 31 of the planetary gear mechanism 30 is connected as one with the turbine shaft 28 of the torque converter 2, and a carrier 33 is connected as one with an input shaft 40 of the continuously variable transmission 4 of belt-type. Furthermore, this carrier 33 and sun gear 31 are selectively connected via the forward-travel clutch C1, and a ring gear 32 is configured so as to be selectively fixed to a housing via the reverse-travel brake B1.

The forward-travel clutch C1 and the reverse-travel brake B1 constitute hydraulic-type friction engagement elements engaged and disengaged by a hydraulic pressure control circuit 20 described hereinafter; as a result of the forward-travel clutch C1 being engaged and the reverse-travel brake B1 being disengaged, the forward-reverse switching device 3 adopts a rotation in unison condition and a forward-travel drive transmission channel is established (achieved); and in this condition, drive force in a forward-travel direction is transmitted to a side of the continuously variable transmission 4 of belt-type

Meanwhile, as a result of the reverse-travel brake B1 being engaged and the forward-travel clutch C1 being disengaged, a reverse-travel drive transmission channel is established (achieved) by the forward-reverse switching device 3. In this condition, the input shaft 40 rotates in an opposite direction with respect to the turbine shaft 28, and this drive force in a reverse-travel direction is transmitted to the side of the continuously variable transmission 4 of belt-type. Furthermore, when the forward-travel clutch C1 and the reverse-travel brake B1 are both disengaged, the forward-reverse switching device 3 will be neutral (cutoff condition), cutting off transmission of motive force.

### - Continuously variable transmission of belt-type -

The continuously variable transmission 4 of belt-type comprises an input-side primary pulley 41, an output-side secondary pulley 42, and a metal belt 43 wound around the primary pulley 41 and the secondary pulley 42, etc.

The primary pulley 41 is a variable pulley having a variable effective diameter and comprises a fixed sheave 411 fixed to the input shaft 40 and a moveable sheave 412 provided in a condition so as to be capable of sliding only in an axial direction of the input shaft 40. Similarly, the secondary pulley 42 is also a variable pulley having a variable effective diameter and comprises a fixed sheave 421 fixed to an output shaft 44 and a moveable sheave 422 provided in a condition so as to be capable of sliding only in an axial direction of the output shaft 44.

A hydraulic actuator 413 is disposed at the moveable sheave 412 side of the primary pulley 41 in order to change a V-groove width between the fixed sheave 411 and the moveable sheave 412. Furthermore, a hydraulic actuator 423 is similarly disposed also at the moveable sheave 422 side of the secondary pulley 42 in order to change a V-groove width between the fixed sheave 421 and the moveable sheave 422.

As a result of controlling a hydraulic pressure of the hydraulic actuator 413 of the primary pulley 41 in the continuously variable transmission 4 of belt-type of the above-described configuration, the respective V-groove widths of the primary pulley 41 and the secondary pulley 42 vary, a winding diameter (effective diameter) of the belt 43 changes, and the gear ratio (gear ratio = input-shaft rotation speed Nin / output-shaft rotation speed Nout) continuously changes. Furthermore, the hydraulic pressure of the hydraulic actuator 423 of the secondary pulley 42 is controlled such that the belt 43 is clamped with a prescribed clamping pressure whereat belt slipping does not occur. These controls are executed by the ECU 8 and the hydraulic pressure control circuit 20 (see FIG. 2).

The hydraulic pressure control circuit 20 is provided with a linear solenoid valve and an on-off solenoid valve, etc., and by switching a hydraulic channel by controlling excitation and non-excitation of those solenoid valves, speed change control of the continuously variable transmission 4 of belt-type and engagement-disengagement control of the lock-up clutch 24, etc. are carried out. Excitation and non-excitation of the linear solenoid valve and the on-off solenoid valve of the hydraulic pressure control circuit 20 are controlled using a solenoid control signal (instruction hydraulic-pressure signal) from the ECU 8.

### - ECU -

The ECU 8 is, as shown in FIG. 2, provided with, for example, a CPU 81, a ROM 82, a RAM 83, and a back-up RAM 84.

Various types of control program and maps, etc. referenced upon execution of those various types of control program are recorded in the ROM 82. The CPU 81 performs arithmetic processing based on the various types of control program and maps recorded in the ROM 82. Furthermore, the RAM 83 has memory for temporarily recording results of arithmetic operations of the CPU 81 and data input from each sensor, etc., and the back-up RAM 84 has non-volatile memory for recording data of the engine 1 to be stored upon stopping thereof, etc.

This CPU 81, ROM 82, RAM 83, and back-up RAM 84 are mutually connected via a bus 87, and in addition, are connected to an input interface 85 and an output interface 86.

The engine rotation speed sensor 101, the throttle-opening degree sensor 102, the coolant temperature sensor 103, a turbine rotation speed sensor 104, an input shaft rotation speed sensor 105, the vehicle speed sensor 106, the accelerator opening amount sensor 107, a brake pedal sensor 108, and a lever position sensor 109 detecting a lever position (operating position) of a shift lever 9, etc. are connected to the input interface 85 of the ECU 8, and the output signals of each of those sensors, in other words, the rotation speed (engine rotation speed) NE of the engine 1, a throttle-opening degree "theta"th of the throttle valve 12, a coolant water temperature Tw of the engine 1, a rotation speed (turbine rotation speed) NT of the turbine shaft 28, the rotation speed (input shaft rotation speed) Nin of the input shaft 40, a vehicle speed V, the operation amount (accelerator opening amount) Acc of an accelerator operation member such as the accelerator pedal, etc., an existence or non-existence (brake ON/ OFF) of an operation of a foot brake constituting a normal-use brake, and a signal indicating a lever position (operation position) of the shift lever 9, etc. are provided to the ECU 8. The throttle motor 13, a fuel injection device 14, an ignition device 15, and the hydraulic pressure control circuit 20, etc. are connected to the output interface 86.

Here, of the signals provided to the ECU 8, the turbine rotation speed NT matches the input shaft rotation speed Nin during forward travel with the forward-travel clutch C1 of the forward-reverse switching device 3 engaged, and the vehicle speed V corresponds to the rotation speed (output shaft rotation speed) Nout of the output shaft 44 of the continuously variable transmission 4 of belt-type. Furthermore, the accelerator opening amount Acc indicates an output requirement amount of the driver.

Furthermore, the shift lever 9 is configured so as to be capable of being selectively operated to positions such as a parking position "P" for vehicle parking, a reverse position "R" for reverse travel, a neutral position "N" cutting off the transmission of motive force, a drive position "D" for forward travel, and a manual position "M" at which the gear ratio of the continuously variable transmission 4 of belt-type can be increased or decreased by a manual operation during forward driving, etc.

The manual position "M" is provided with a down-shift position and an up-shift position for increasing and decreasing the gear ratio or a plurality of range positions, etc. allowing selection of a plurality of speed change ranges with a different speed change range upper limit (side at which the gear ratio is small).

The lever position sensor 109 comprises a plurality of ON-OFF switches, etc. detecting operation of the shift lever 9 to, for example, the parking position "P", the reverse position "R", the neutral position "N", the drive position "D", and the manual position "M", or the up-shift position and the down-shift position, or a range position, etc. It should be noted that, in order to change the gear ratio by a manual operation, a down-shift switch, an up-shift switch, or a lever, etc. can be provided on a steering wheel, etc independently of the shift lever 9.

Further, based on output signals, etc. from the above-described various sensors, the ECU 8 executes output control of the engine 1, speed change control of the continuously variable transmission 4 of belt-type, and gear-ratio calculation processing, etc. described hereinafter.

### - Output Control of the Engine 1 -

Output control of the engine 1 is performed by the throttle motor 13, the fuel injection device 14, the ignition device 15, and the ECU 8, etc. and speed change control of the continuously variable transmission 4 of belt-type, belt clamping force control, and control of engagement and disengagement of the lock-up clutch 24 are all performed by the hydraulic pressure control circuit 20. This throttle motor 13, fuel injection device 14, ignition device 15, and hydraulic pressure control circuit 20 are controlled by the ECU 8.

### - Speed Change Control of the Continuously variable transmission of belt-type -

In speed change control of the continuously variable transmission 4 of belt-type, a target gear ratio is calculated using gear-ratio calculation processing described hereinafter, and a gear ratio is set based on that target gear ratio by performing speed change control of the continuously variable transmission 4 of belt-type, or in other words, control of a speed change control pressure through provision and discharge of operating oil with respect to the hydraulic actuator 413 of the primary pulley 41.

### - Gear-ratio Calculation Processing -

First, a gear-ratio map as shown in FIG. 9 is used in conventional speed change control. Generally, the gear-ratio map shown in FIG. 9 is set so as to optimize a fuel efficiency in accordance with the vehicle speed or accelerator opening amount, and a gear ratio for optimum fuel efficiency can be constantly set using this gear-ratio map. Here, in speed change control of the continuously variable transmission of belt-type, there are cases wherein responsiveness or drivability should be prioritized over fuel efficiency, even if the accelerator opening amount (target power) is the same. For example, when the accelerator is depressed by foot, it is often the case that enabling setting prioritizing drivability or responsiveness with respect to the accelerator operation over fuel efficiency conforms to an intention of the driver. However, as the gear ratio is set so as to constantly prioritize fuel efficiency in speed change control using the gear ratio map of FIG. 9, performing this type of setting prioritizing drivability or responsiveness with respect the accelerator operation is not possible.

In consideration of this type of point, this example is characterized in that, upon depression or return of the accelerator by foot, drivability (direct feel) and responsiveness with respect the accelerator operation are improved by holding the gear ratio of the continuously variable transmission and changing power and drive force using only an engine torque.

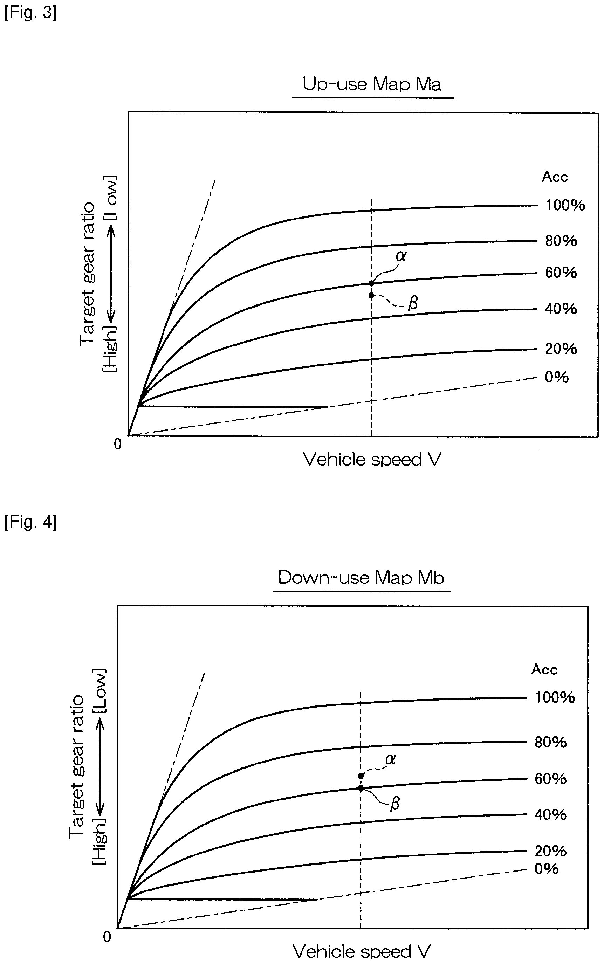

Hereinafter, a specific example of that control (gear-ratio calculation processing) is explained by way of reference to FIGs. 3 to 8.

First, a map used in the gear-ratio calculation processing of this example is explained by way of reference to FIG. 3 and FIG. 4.

The map shown in FIG. 3 is an up-use map Ma having the vehicle speed V and the accelerator opening amount Acc as parameters; is used to find a target gear ratio "alpha" (first target gear ratio) whereat fuel efficiency is optimized in accordance with this vehicle speed V and accelerator opening amount Acc; and is recorded in the ROM 82 of the ECU 8.

The map shown in FIG. 4 is a down-use map Mb having the vehicle speed V and the accelerator opening amount Acc as parameters; is used to find a target gear ratio "beta" (second target gear ratio) in accordance with this vehicle speed V and accelerator opening amount Acc; and is recorded in the ROM 82 of the ECU 8.

The down-use map Mb shown in FIG. 4 is a map for calculating a target gear ratio "beta" prioritizing target power and drive force, and is set such that the target gear ratio "beta" will be a high side value with respect to the target gear ratio "alhpa" of the up-use map Ma shown in FIG. 3. That is to say, in a case wherein target gear ratios are calculated from the up-use map Ma shown in FIG. 3 and the down-use map Mb shown in FIG. 4 with the same vehicle speed V and accelerator opening amount Acc, the target gear ratio "beta" calculated using the down-use map Mb will be a value on a higher side than the target gear ratio "alpha" calculated using the up-use map Ma. It should be noted that a gear ratio described as "high" herein is a "small" gear ratio.

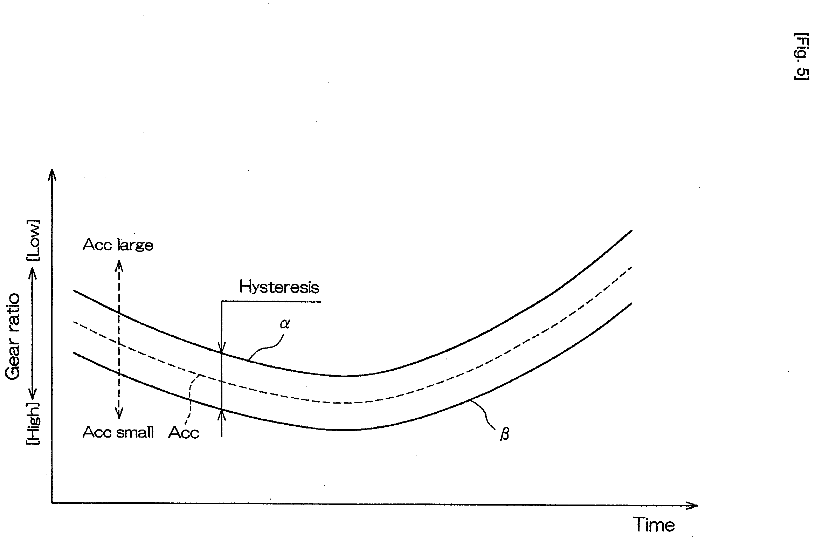

To explain in detail, when for example, the accelerator opening amount Acc (target power) changes with the progress of time, as shown in FIG. 5, the target gear ratio "alpha" calculated using the up-use map Ma and the target gear ratio "beta" calculated using the down-use map Mb change with a fixed interval hysteresis pursuant to that change in the accelerator opening amount Acc, and the target gear ratio "beta" will be a gear ratio constantly on a high side with respect to the target gear ratio "alpha". It should be noted that a hysteresis amount between the target gear ratio "alpha" and the target gear ratio "beta" as shown in FIG. 5 is set so as to become smaller towards a maximum and minimum gear-ratio width, and furthermore, the hysteresis amount is set so as to become 0 (target gear ratio "alpha" - target gear ratio "beta") close to the maximum and minimum gear-ratio width.

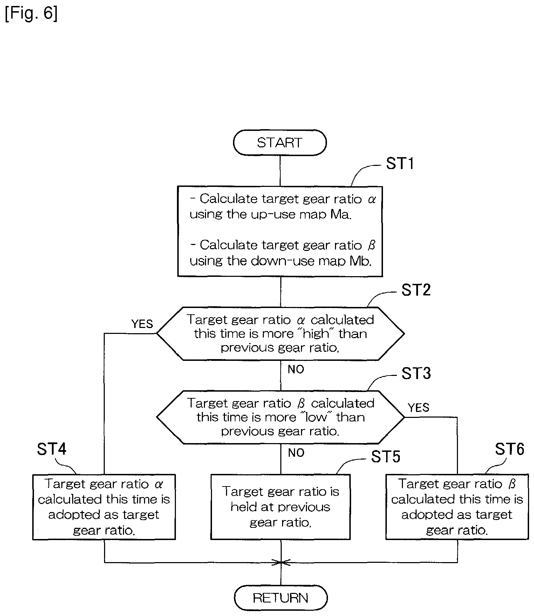

Next, an example of speed change control of the continuously variable transmission 4 of belt-type is explained by way of reference to a flowchart of FIG. 6. A control routine shown in FIG. 6 is executed repeatedly every prescribed interval (period) within the ECU 8.

In Step ST1, first of all, the vehicle speed V is read in from an output signal of the vehicle speed sensor 106 and the accelerator opening amount Acc is read in from an output signal of the accelerator opening amount sensor 107. Next, a low-side target gear ratio "alpha" is calculated using the sampled vehicle speed V and accelerator opening amount Acc and the up-use map Ma of FIG. 3. Furthermore, a high-side target gear ratio "beta" is simultaneously calculated using the sampled vehicle speed V and accelerator opening amount Acc and the down-use map Mb of FIG. 4. It should be noted that a gear ratio described as "low" herein is a large gear ratio, and furthermore, a gear ratio described as "high" herein is a "small" gear ratio.

Next, in Step ST2, it is determined whether or not the target gear ratio "alpha" calculated this time (calculated in Step ST1) is more "high" than a previous gear ratio (actual gear ratio of the continuously variable transmission 4 of belt-type), and in a case where that determination result is a positive judgment, the procedure proceeds to Step ST4. In a case where the determination result of Step ST2 is a negative judgment, the procedure proceeds to Step ST3.

In Step ST4, the target gear ratio "alpha" calculated this time (calculated in Step ST1) is adopted as the target gear ratio for use in speed change control. After that, the procedure returns.

In Step ST3, it is determined whether or not the target gear ratio "beta" calculated this time (calculated in Step ST1) is more "low" than a previous gear ratio (actual gear ratio of the continuously variable transmission 4 of belt-type), and in a case where that determination result is a negative judgment, the procedure proceeds to Step ST5. In a case where the determination result of Step ST3 is a positive judgment, the procedure proceeds to Step ST6.

In Step ST5, the target gear ratio for use in speed change control of the continuously variable transmission 4 of belt-type is held at the previous gear ratio (actual gear ratio). After that, the procedure returns.

In Step ST6, the target gear ratio "beta" calculated this time (calculated in Step ST1) is adopted as the target gear ratio for use in speed change control of the continuously variable transmission 4 of belt-type. After that, the procedure returns.

Hereinafter, a more specific example of the above-explained gear-ratio calculation processing and speed change control is explained by way of reference to FIG. 7 and

FIG. 8. In the following example, control upon depression of the accelerator by foot or return of the accelerator by foot is explained.

### - Upon Depression of the Accelerator by Foot -

First, when the accelerator opening amount Acc (target power) is changing to a small side, as shown in FIG. 7, a target gear ratio "alpha"m calculated at a certain time is more "high" than a previous actual gear ratio ("alpha"m-1) (positive judgment in Step ST2 of FIG. 6), and therefore, that target gear ratio "alpha"m is adopted as the target gear ratio for use in speed change control of the continuously variable transmission 4 of belt-type. Next, when the flowchart shown in FIG. 6 cycles through once and the next target gear ratio "alpha"m+1 is calculated in Step ST1, that target gear ratio "alpha"m+1 is more "high" than the previous target gear ratio ("alpha"m), and therefore, that target gear ratio "alpha"m+1 is adopted as the target gear ratio for use in speed change control of the continuously variable transmission 4 of belt-type.

As a process from [Positive judgment in Step ST2] to [Step ST4] is sequentially repeated in the flowchart shown in FIG. 6 in this way when the accelerator opening amount Acc (target power) is changing to a small side, the gear ratio of the continuously variable transmission 4 of belt-type is controlled based on the target gear ratio "alpha" calculated using the up-use map Ma of FIG. 3. It should be noted that, when the accelerator opening amount Acc (target power) is changing to a small side, the target gear ratio "beta" calculated using the down-use map Mb of FIG. 4 does not become more "low" than the previous gear ratio.

Next, if the accelerator is depressed by foot at a point in time TH1, the accelerator opening amount Acc (target power) reverses towards a large side, and therefore, a target gear ratio "alpha"x (not shown) calculated first after that reversal will be equal to or more "low" than the previous actual gear ratio (that is to say, a target gear ratio "alpha"Hl calculated immediately after depression of the accelerator by foot). At this point in time, or in other words, when the accelerator opening amount Acc (target power) reverses due to depression of the accelerator by foot, the gear ratio is held (Step ST5 of FIG. 6) at the target gear ratio being used for speed change control at the current point in time, or in other words, the target gear ratio "alpha"H1.

Next, after reversal of the accelerator opening amount Acc (target power), at a point in time where the target gear ratio "beta" calculated using the down-use map Mb becomes equal to or more "low" than the gear ratio held as explained above (a point in time where the judgment of Step ST3 of FIG. 6 becomes positive), the gear ratio of the continuously variable transmission 4 of belt-type is controlled based on the target gear ratio "beta" calculated using the down-use map Mb of FIG. 4.

Here, if a hold region (period of time) A wherein the gear ratio of the continuously variable transmission 4 of belt-type is held is too long, the drive force (power) and fuel efficiency may deteriorate, etc., and therefore, setting is performed with this point taken into consideration. In specific terms, the hold region A correlates an amount of hysteresis (FIG. 5) of the target gear ratio "beta" with respect to the target gear ratio "alpha", and therefore, that hysteresis amount is determined empirically through testing and calculation, etc. and is set with drive force (power) or fuel efficiency, etc. that can be covered using engine torque alone taken into consideration.

As explained above, in a case wherein the target power reverses due to depression of the accelerator by foot when performing speed change control of the continuously variable transmission 4 of belt-type using the target gear ratio "alpha" of the low side, the power and drive force can be changed using only the engine torque by holding the gear ratio of the continuously variable transmission 4 of belt-type, and responsiveness and direct feel with respect to the accelerator operation are improved.

### - Upon Return of the Accelerator by Foot -

First, when the accelerator opening amount Acc (target power) is changing to a large side, as shown in FIG. 8, a target gear ratio "beta"n calculated at a certain time is more "low" than a previous actual gear ratio ("beta"n-1) (positive judgment in Step ST3 of FIG. 6), and therefore, that target gear ratio "beta"n is adopted as the target gear ratio for use in speed change control of the continuously variable transmission 4 of belt-type. Next, when the flowchart shown in FIG. 6 cycles through once and the next target gear ratio "beta"n+1 is calculated in Step ST1, that target gear ratio "beta"n+1 is more "low" than the previous target gear ratio ("beta"n), and therefore, that target gear ratio "beta"n+1 is adopted as the target gear ratio for use in speed change control of the continuously variable transmission 4 of belt-type.

As a process from [Positive judgment in Step ST3] to [Step ST6] is sequentially repeated in the flowchart shown in FIG. 6 in this way when the accelerator opening amount Acc (target power) is changing to a large side, the gear ratio of the continuously variable transmission 4 of belt-type is controlled based on the target gear ratio "beta" calculated using the down-use map Mb of FIG. 4. It should be noted that, when the accelerator opening amount Acc (target power) is changing to a large side, the target gear ratio "alpha" calculated using the up-use map Ma of FIG. 3 does not become more "high" than the previous gear ratio.

Next, if the accelerator is subjected to a return operation by foot at a point in time TH2, the accelerator opening amount Acc (target power) reverses towards a small side, and therefore, a target gear ratio "beta"x (not shown) calculated first after that reversal will be equal to or more "high" than the previous actual gear ratio (that is to say, a target gear ratio "beta"H2 calculated immediately after return of the accelerator by foot). At this point in time, or in other words, when the accelerator opening amount Acc (target power) reverses due to a return operation of the accelerator by foot, the gear ratio is held (Step ST5 of FIG. 6) at the target gear ratio being used for speed change control at the current point in time, or in other words, the target gear ratio "beta"H2.

Next, after reversal of the accelerator opening amount Acc (target power), at a point in time where the target gear ratio "alpha" calculated using the up-use map Ma becomes more "high" than the gear ratio held as explained above (a point in time where the judgment of Step ST2 becomes positive), the gear ratio of the continuously variable transmission 4 of belt-type is controlled based on the target gear ratio "alpha" calculated using the up-use map Ma of FIG. 3.

As explained above, in a case wherein the target power reverses due to return of the accelerator by foot when performing speed change control of the continuously variable transmission 4 of belt-type using the target gear ratio "beta" of the high side, responsiveness to the accelerator operation can be improved by holding the gear ratio of the continuously variable transmission 4 of belt-type.

### - Other Embodiments -

Although the target gear ratios "alpha" and "beta" are calculated using the up-use map Ma and the down-use map Mb in the above-explained example, the target gear ratios "alpha" and "beta" can each be calculated using a calculating device.

Although an example of application of the present invention to speed change control of a continuously variable transmission of belt-type was shown in the above explained example, the present invention is not limited to this and, for example, can be applied to speed change control of other continuously variable transmissions such as a traction-type continuously variable transmission, etc.

Although the above example shows an example of application of the present invention in speed change control of a continuously variable transmission of a vehicle whereupon a gasoline engine is mounted, the present invention is not limited to this, and application is possible also in speed change control of a continuously variable transmission of a vehicle whereupon another engine such as a diesel engine, etc. is mounted. Furthermore, the motive power source of the vehicle may, other than an engine (internal combustion engine), be an electric motor or a hybrid-type motive power source comprising an engine and an electric motor.

Note that some symbol characters are described as alphabetical characters as shown below in this specification. Individual alphabetical characters "alpha", "beta", "theta" and ">=" and "<=" correspond to respective symbol characters "*α*","*β*","*θ*","≧", and "≦".

It should be noted that the present invention can have many other embodiments. Accordingly, the above-described embodiments are no more than simple examples and should not be interpreted in a limited manner. The scope of the present invention is set forth by the scope of the patent claims, and the disclosure is in no way binding. In addition, all modifications and changes within a scope equivalent to that of the patent claims are within the scope of the present invention.

### Industrial Applicability

The present invention can be applied not only to an FF (front-engine, front-drive) type vehicle, but also to an FR (front-engine, rear-drive) type vehicle and a four-wheel drive vehicle.

## Claims

1. A control device (8) of a continuously variable transmission (4) controlling a gear ratio (α, β) of a continuously variable transmission (4) mounted in a vehicle, wherein:
a first target gear-ratio calculation means (8) for calculating a first target gear ratio (αx) based on a driving condition of the vehicle and a second target gear-ratio calculation means (8) for calculating a second target gear ratio (βx) higher than the first target gear ratio (αx) based on a driving condition of the vehicle are provided,
with regard to a region wherein the first target gear ratio (αx) calculated by the first target gear-ratio calculation means (8) is not more "high" than a gear ratio of the continuously variable transmission (4) and the second target gear ratio (βx) calculated by the second target gear-ratio calculation means (8) is not more "low" than the gear ratio of the continuously variable transmission (4), the gear ratio of the continuously variable transmission (4) is held,
**characterized in that**
the first target gear ratio (αx) calculated by the first target gear-ratio calculation means (8) is adopted as a current gear ratio (αm) of the continuously variable transmission (4) when the first target gear ratio (αx) is more "high" than a previous gear ratio (αm-1) of the continuously variable transmission (4), and the second target gear ratio (βx) calculated by the second target gear-ratio calculation means (8) is adopted as a current gear ratio (βn) of the continuously variable transmission (4) when the second target gear ratio (βx) is more "low" than a previous gear ratio (βn-1) of the continuously variable transmission (4).

2. The control device of a continuously variable transmission (4) of claim 1, wherein:
the first target gear-ratio calculation means (8) and the second target gear-ratio calculation means (8) calculate the first target gear ratio (αx) and the second target gear ratio (βx), respectively, based on a vehicle speed (V) and an accelerator opening amount (Acc) of the vehicle.

3. The control device of a continuously variable transmission (4) of claim 1, wherein:
the first target gear-ratio calculation means (8) calculates the first target gear ratio (αx) using a first map (Ma) having a vehicle speed (V) and an accelerator opening amount (Acc) of the vehicle as a parameter and the second target gear-ratio calculation means (8) calculates the second target gear ratio (βx) using a second map (Mb) having a vehicle speed (V) and an accelerator opening amount (Acc) of the vehicle as a parameter, and
the gear ratio of the continuously variable transmission (4) is controlled based on the first target gear ratio (αx) calculated using the first map (Ma) when the accelerator opening amount (Acc) changes to a decreasing side, and the gear ratio of the continuously variable transmission is controlled based on the second target gear ratio (βx) calculated using the second map (Mb) when the accelerator opening amount (Acc) changes to an increasing side.

## Patentansprüche

1. Steuervorrichtung (8) für ein stufenlos variables Getriebe (4), das ein Übersetzungsverhältnis (α, β) eines in einem Fahrzeug angebrachten stufenlos variablen Getriebes (4) steuert, wobei:
ein erstes Zielübersetzungsverhältnis-Berechnungsmittel (8) zum Berechnen eines ersten Zielübersetzungsverhältnisses (αx) auf Grundlage eines Fahrzustands des Fahrzeugs und ein zweites Zielübersetzungsverhältnis-Berechnungsmittel (8) zum Berechnen eines zweiten Zielübersetzungsverhältnisses (βx) vorgesehen sind, das höher ist als das erste Zielübersetzungsverhältnis (αx), auf Grundlage eines Fahrzustands des Fahrzeugs,
in Bezug auf einen Bereich, in dem das durch das erste Zielübersetzungsverhältnis-Berechnungsmittel (8) berechnete erste Zielübersetzungsverhältnis (αx) nicht "höher" ist als ein Übersetzungsverhältnis des stufenlos variablen Getriebes (4), und das durch das zweite Zielübersetzungsverhältnis-Berechnungsmittel (8) berechnete zweite Zielübersetzungsverhältnis (βx) nicht "niedriger" ist als das Übersetzungsverhältnis des stufenlos variablen Getriebes (4), das Übersetzungsverhältnis des stufenlos variablen Getriebes (4) gehalten wird,
**dadurch gekennzeichnet, dass**
das erste Zielübersetzungsverhältnis (αx), das durch das erste Zielübersetzungsverhältnis-Berechnungsmittel (8) berechnet wird, als ein aktuelles Übersetzungsverhältnis (αm) des stufenlos variablen Getriebes (4) dann verwendet wird, wenn das erste Zielübersetzungsverhältnis (αx) "höher" ist als ein vorangehendes Übersetzungsverhältnis (αm-1) des stufenlos variablen Getriebes (4), und das zweite Zielübersetzungsverhältnis (βx), das durch das zweite Zielübersetzungsverhältnis-Berechnungsmittel (8) berechnet wird, als ein aktuelles Übersetzungsverhältnis (βn) des stufenlos variablen Getriebes (4) dann verwendet wird, wenn das zweite Zielübersetzungsverhältnis (βx) "niedriger" ist als ein vorangehendes Übersetzungsverhältnis (βn-1) des stufenlos variablen Getriebes (4)

2. Steuervorrichtung für ein stufenlos variables Getriebe (4) nach Anspruch 1, wobei:
das erste Zielübersetzungsverhältnis-Berechnungsmittel (8) und das zweite Zielübersetzungsverhältnis-Berechnungsmittel (8) jeweils das erste Zielübersetzungsverhältnis (αx) und das zweite Zielübersetzungsverhältnis (βx) auf Grundlage einer Fahrzeuggeschwindigkeit (V) und eines Beschleuniger-Öffnungsbetrags (Acc) des Fahrzeugs berechnen.

3. Steuervorrichtung für ein stufenlos variables Getriebe (4) nach Anspruch 1, wobei:
das erste Zielübersetzungsverhältnis-Berechnungsmittel (8) das erste Zielübersetzungsverhältnis (αx) unter Verwendung eines ersten Kennfelds (Ma) mit einer Fahrzeuggeschwindigkeit (V) und einem Beschleuniger-Öffnungsbetrag (Acc) des Fahrzeugs als Parameter berechnet und das zweite Zielübersetzungsverhältnis-Berechnungsmittel (8) das zweite Zielübersetzungsverhältnis (βx) unter Verwendung eines zweiten Kennfelds (Mb) mit einer Fahrzeuggeschwindigkeit (V) und einem Beschleuniger-Öffnungsbetrag (Acc) des Fahrzeugs als Parameter berechnet, und
das Übersetzungsverhältnis des stufenlos variablen Getriebes (4) auf Grundlage des ersten Zielübersetzungsverhältnisses (αx) gesteuert wird, das unter Verwendung des ersten Kennfelds (Ma) berechnet wird, falls sich der Beschleuniger-Öffnungsbetrag (Acc) auf eine abnehmende Seite ändert, und das Übersetzungsverhältnis des stufenlos variablen Getriebes (4) auf Grundlage des zweiten Zielübersetzungsverhältnisses (βx) gesteuert wird, das unter Verwendung des zweiten Kennfelds (Mb) berechnet wird, falls sich der Beschleuniger-Öffnungsbetrag (Acc) auf eine zunehmende Seite ändert.

## Revendications

1. Dispositif de commande (8) d'une transmission à variation continue (4) commandant un rapport d'engrenage (α, β) d'une transmission à variation continue (4) montée dans un véhicule, dans lequel :
un premier moyen de calcul de rapport d'engrenage cible (8) pour calculer un premier rapport d'engrenage cible (αx) sur la base d'une condition de conduite du véhicule et un second moyen de calcul de rapport d'engrenage cible (8) pour calculer un second rapport d'engrenage cible (βx) supérieur au premier rapport d'engrenage cible (αx) sur la base d'une condition de conduite du véhicule sont fournis,
concernant une région dans laquelle le premier rapport d'engrenage cible (αx) calculé par le premier moyen de calcul de rapport d'engrenage cible (8) n'est pas plus « élevé » qu'un rapport d'engrenage de la transmission à variation continue (4) et le second rapport d'engrenage cible (βx) calculé par le second moyen de calcul de rapport d'engrenage cible (8) n'est pas plus « bas » que le rapport d'engrenage de la transmission à variation continue (4), le rapport d'engrenage de la transmission à variation continue (4) est conservé,
**caractérisé en ce que**
le premier rapport d'engrenage cible (αx) calculé par le premier moyen de calcul de rapport d'engrenage cible (8) est adopté en tant que rapport d'engrenage actuel (αm) de la transmission à variation continue (4) lorsque le premier rapport d'engrenage cible (αx) est plus « élevé » qu'un rapport d'engrenage précédent (αm-1) de la transmission à variation continue (4), et le second rapport d'engrenage cible (βx) calculé par le second moyen de calcul de rapport d'engrenage cible (8) est adopté en tant que rapport d'engrenage actuel (βn) de la transmission à variation continue (4) lorsque le second rapport d'engrenage cible (βx) est plus « bas » qu'un rapport d'engrenage précédent (βn-1) de la transmission à variation continue (4).

2. Dispositif de commande d'une transmission à variation continue (4) selon la revendication 1, dans lequel :
le premier moyen de calcul de rapport d'engrenage cible (8) et le second moyen de calcul de rapport d'engrenage cible (8) calculent le premier rapport d'engrenage cible (αx) et le second rapport d'engrenage cible (βx), respectivement, sur la base d'une vitesse de véhicule (V) et d'une quantité d'ouverture d'accélérateur (Acc) du véhicule.

3. Dispositif de commande d'une transmission à variation continue (4) selon la revendication 1, dans lequel :
le premier moyen de calcul de rapport d'engrenage cible (8) calcule le premier rapport d'engrenage cible (αx) en utilisant une première carte (Ma) ayant une vitesse de véhicule (V) et une quantité d'ouverture d'accélérateur (Acc) du véhicule en tant que paramètre et le second moyen de calcul de rapport d'engrenage cible (8) calcule le second rapport d'engrenage cible (βx) en utilisant une seconde carte (Mb) ayant une vitesse de véhicule (V) et une quantité d'ouverture d'accélérateur (Acc) du véhicule en tant que paramètre, et
le rapport d'engrenage de la transmission à variation continue (4) est commandé sur la base du premier rapport d'engrenage cible (αx) calculé en utilisant la première carte (Ma) lorsque la quantité d'ouverture d'accélérateur (Acc) devient décroissante, et le rapport d'engrenage de la transmission à variation continue est commandé sur la base du second rapport d'engrenage cible (βx) calculé en utilisant la seconde carte (Mb) lorsque la quantité d'ouverture d'accélérateur (Acc) devient croissante.
